# EUROPÄISCHE PATENTANMELDUNG

(11) **EP 2 369 168 A2**
(43) Veröffentlichungstag der Anmeldung: **28.09.2011**
(21) Anmeldenummer: 11159770.4
(22) Anmeldetag: 25.03.2011
(51) Int. Cl.: F03B 3/10, E02B 8/08

(54) **Wasserkraftschnecke**

(30) Priorität: 25.03.2010 AT 2002010 U
(71) Anmelder: Jank, Siegfried, 5225 Jeging (AT)
(72) Erfinder: Jank, Siegfried, 5225 Jeging (AT)
(74) Vertreter: KLIMENT & HENHAPEL

(57) **Zusammenfassung**

Wasserkraftschnecke (1), umfassend ein von einem Mantelelement (4) umgebenes, mit einem Generator (G) direkt oder indirekt gekoppeltes Schneckenelement (3), wobei das Schneckenelement (3) mindestens einen Schneckengang (2) ausbildet, welcher von einem der Schwerkraft folgendem Oberwasser (14) in Richtung eines Unterwassers (15) durchströmbar und dadurch das Schneckenelement (3) um eine Drehachse (5) in Rotation versetzbar ist. Erfindungsgemäß ist es vorgesehen, dass das Mantelelement (4) am Schneckenelement (3) befestigt ist und die Koppelung des Schneckenelementes (3) mit dem Generator (G) durch eine kraft- oder formschlüssig mit dem Mantelelement (4) verbundene Abtriebseinrichtung erfolgt. Da innerhalb des Schneckengangs (2) absteigende Wasserlebewesen, insbesondere Fische, nicht mehr zwischen dem Schneckenelement (3) und dem Mantelelement (4) eingequetscht werden können, ist ein gefahrloses Passieren der Wasserkraftschnecke durch Wasserlebewesen, insbesondere Fische, möglich. Des Weiteren können Spaltverluste vermieden und dadurch der Wirkungsgrad von Wasserkraftschnecken optimiert werden.

## Beschreibung

### GEBIET DER ERFINDUNG

Die Erfindung bezieht sich auf eine Wasserkraftschnecke, umfassend ein von einem Mantelelement umgebenes, mit einem Generator direkt oder indirekt gekoppeltes Schneckenelement, wobei vom Schneckenelement mindestens ein Schneckengang ausgebildet ist, welcher von einem der Schwerkraft folgendem Oberwasser in Richtung eines Unterwassers durchströmbar und dadurch das Schneckenelement um eine Drehachse in Rotation versetzbar ist und wobei das Mantelelement am Schneckenelement befestigt ist gemäß dem Oberbegriff des Anspruchs 1.

Wasserkraftschnecken der gattungsgemäßen Art werden zur Wasserkraftnutzung bei Anlagen mit niedriger Fallhöhe und geringer Wasserführung eingesetzt.

### STAND DER TECHNIK

Vom Prinzip her entspricht das Arbeitsprinzip der Wasserkraftschnecke einer Umkehr der archimedischen Schraube.

Während die archimedische Schraube jedoch zum Heben von Wasser von einem tieferen auf ein höheres Niveau konzipiert wurde, wird bei einer gattungsgemäßen Wasserkraftschnecke der Lageenergieunterschied zwischen zwei auf unterschiedlichen Niveaus befindlichen Abschnitten eines Fließgewässers genutzt, wobei der zumeist schräggestellten Wasserkraftschnecke in einem oberen Endbereich Wasser zugeführt wird, welches sich unter Einwirkung der Schwerkraft abwärts bewegt und dabei ein mit einem Generator gekoppeltes Schneckenelement in Rotation versetzt.

Latente Wasserkraft wird somit in mechanische Energie und in weiterer Folge in elektrische Energie umgewandelt. Die gewonnene elektrische Energie kann lokalen Verbrauchern oder einem öffentlichen Energieversorgungsnetz zugeführt werden.

Konventionelle Wasserkraftschnecken umfassen ein starr an einer Lagervorrichtung befestigtes, auch als "Trog" bezeichnetes, zylindrisches Mantelelement, innerhalb welchem ein gewundenes Schneckenelement rotiert. Das Mantelelement kann fix in einem Bauwerk verankert, z.B. einbetoniert sein. Das zylindrische Mantelelement konventioneller Wasserkraftschnecken ist nach oben hin offen bzw. als Halbschale ausgebildet.

Der Abtrieb des Schneckenelementes bzw. dessen Koppelung mit dem Generator erfolgt gemäß dem Stand der Technik über ein als Welle ausgeführtes, zentrales Versteifungselement, auf welchem das Schneckenelement aufgeschweißt ist. Das zentrale Versteifungselement ist üblicherweise rohrförmig ausgeführt und verläuft entlang der Drehachse des Schneckenelementes.

Um eine ausreichende Steifigkeit des Schneckenelementes zu gewährleisten, beträgt der Durchmesser des zentralen Versteifungselementes etwa 50% des Durchmessers des Schneckenelementes. Das Schluckvermögen der Wasserkraftschnecke ist durch eine solche große Dimensionierung des zentralen Versteifungselementes begrenzt bzw. die Wasserkraftschnecke muss zur Erzielung einer gewünschten Leistung verhältnismäßig groß gebaut werden.

Ein oberer und ein unterer Endbereich des zentralen Versteifungselementes sind zapfen- bzw. wellenförmig ausgebildet und an korrespondierenden Lagerungseinrichtungen drehbar gehalten. Der untere Endbereich des zentralen Versteifungselementes bzw. die untere Lagerungseinrichtung ist zumeist wasserbenetzt, während der obere Endbereich des zentralen Versteifungselementes mittels einer Zahnkranz- oder Passfeder-Anordnung eine Abtriebs-Schnittstelle zur Verbindung zum Generator oder einem korrespondierenden Getriebe ausbildet.

Zwischen gegenüber der durch das zentrale Versteifungselement ausgebildeten Drehachse peripheren Endbereichen des Schneckenelementes und einer Innenseite des zylindrischen Mantelelementes ist ein Spalt ausgebildet, welcher einige Millimeter beträgt.

Nach längerem Betrieb der Wasserkraftschnecke kann es passieren, dass das Schneckenelement und/oder das zentrale Versteifungselement deformiert werden und sich daher der Spalt verändert.

Wird der Spalt zu groß, entstehen Wirkungsgradeinbußen durch Spaltverluste. Wird der Spalt hingegen zu klein und beginnt das Schneckenelement an der Innenseite des Mantelelementes zu schleifen, hat dies Reibungsverluste sowie eine Beschädigung des Mantelelementes zur Folge.

Zudem konnte beobachtet werden, dass ab einem Spalt mit mehr als 5 mm (radial zur Drehachse gemessener) Breite die Gefahr besteht, dass innerhalb des vom Schneckenelement ausgebildeten Schneckenganges absteigende Wasserlebewesen wie Fische verletzt oder getötet werden.

Darüberhinaus erweist sich auch die Anbindung des Generators an den oberen Endbereich des zentralen Versteifungselementes oft als problematisch, da die Positionierung des Generators dadurch zwingend vorgegeben ist und oft gröbere landschaftliche Eingriffe vorgenommen werden müssen, um das die Wasserkraftschnecke beherbergende Kraftwerk an der gewünschten Position des Flusslaufs bauen zu können.

### DARSTELLUNG DER ERFINDUNG

Der vorliegenden Erfindung liegt daher die Aufgabe zugrunde, diese Nachteile zu vermeiden und eine Wasserkraftschnecke bereitzustellen, welche von Wasserlebewesen, insbesondere Fischen, gefahrlos passiert werden kann.

Des Weiteren sollen Spaltverluste vermieden und der Wirkungsgrad gattungsgemäßer Wasserkraftschnecken optimiert werden, bei gleichzeitiger Erhöhung der Flexibilität der räumlichen Anbindungsmöglichkeiten des Generators an das Schneckenelement.

Erfindungsgemäß werden diese Aufgaben durch eine Wasserkraftschnecke mit den kennzeichnenden Merkmalen des Anspruchs 1 gelöst.

Eine gattungsgemäße Wasserkraftschnecke umfasst ein von einem Mantelelement umgebenes, mit einem Generator gekoppeltes Schneckenelement, wobei das Schneckenelement mindestens einen Schneckengang ausbildet, welcher von einem der Schwerkraft folgendem Oberwasser in Richtung eines Unterwassers durchströmbar und dadurch das Schneckenelement um eine Drehachse in Rotation versetzbar ist. Erfindungsgemäß ist das Mantelelement am Schneckenelement befestigt und erfolgt die Koppelung des Schneckenelementes mit dem Generator durch eine kraft- oder formschlüssig mit dem Mantelelement verbundene Abtriebseinrichtung.

Es wird somit fortan kein Spalt zwischen dem Schneckenelement und dem Mantelelement ausgebildet. Da das Mantelelement mit gleicher Geschwindigkeit mit dem vom Wasser angetriebenen Schneckenelement mitrotiert, findet zwischen dem Schneckenelement und dem Mantelelement keine Relativbewegung bzw. kein Gegeneinander-Scheren statt. Da innerhalb des Schneckengangs absteigende Wasserlebewesen, insbesondere Fische, nicht mehr zwischen dem Schneckenelement und dem Mantelelement eingequetscht werden können, ist ein gefahrloses Passieren der Wasserkraftschnecke durch (sich stromabwärts bewegende) Wasserlebewesen, insbesondere Fische, möglich.

Des Weiteren können Spaltverluste vermieden und dadurch der Wirkungsgrad von Wasserkraftschnecken optimiert werden.

Da das Schneckenelement durch seine Verbindung mit dem Mantelelement ausreichend versteift ist, kann auf die Vorsehung eines Versteifungselementes als Zentrum des Schneckenelementes verzichtet werden. Bei Vorsehung eines zentralen Versteifungselementes kann dessen Querschnitt gegenüber bisherigen Wasserkraftschnecken-Ausführungsformen jedenfalls stark verringert werden.

Auf diese Weise kann das Schluckvermögen bzw. der Volumenstrom der Wasserkraftschnecke bei gleicher Baugröße und somit der Wirkungsgrad beträchtlich erhöht werden.

Der Umstand, dass das Mantelelement erfindungsgemäß ebenfalls rotiert, kann in weiterer Folge auch dahingehend ausgenutzt werden, dass die Koppelung des Generators an die Bewegung des Schneckenelementes nunmehr über das Mantelelement erfolgen kann und zwar durch eine kraft- oder formschlüssig mit dem Mantelelement verbundene Abtriebseinrichtung. Dadurch ergibt sich eine Vielzahl an Positionierungsmöglichkeiten des Generators gegenüber der Wasserkraftschnecke und damit eine erhöhte bauliche Flexibilität.

Eine einfache und stabile Verbindung zwischen dem Schneckenelement und dem Mantelelement ergibt sich gemäß einer besonders bevorzugten Ausführungsvariante der Erfindung, indem das Mantelelement an gegenüber der Drehachse peripheren Endbereichen des Schneckenelementes, beispielsweise durch eine Schweißung befestigt ist.

In einer speziellen Ausführungsvariante der Erfindung ist das Schneckenelement mit einem die Drehachse ausbildenden zentralen Versteifungselement versehen, wobei Endbereiche dieses zentralen Versteifungselementes oder an den Endbereichen des zentralen Versteifungselementes angebrachte Lagerungsfortsätze in korrespondierenden Lagerungseinrichtungen drehbar gelagert sind.

In einer materialökonomischen Ausführungsvariante ist das Versteifungselement als Wellenstummel ausgebildet, welcher sich über weniger als ein Viertel der Längserstreckung des Schneckenelementes erstreckt und vorzugsweise in einem dem Oberwasser zugewandten Endbereich des Schneckenelementes angeordnet ist.

Es kann weiters vorgesehen sein, dass das Mantelelement an seiner Außenseite von mindestens einer, vorzugsweise als Wälzlager ausgeführten Lagerungseinrichtung umgeben ist. In solchem Falle kann auf die Vorsehung eines durchgehenden zentralen Versteifungselementes verzichtet werden. Die Wasserkraftschnecke ist somit zur Aufnahme eines größtmöglichen Volumenstroms fähig. Des Weiteren ist es aufgrund der Lagerung am Mantelelement nicht mehr erforderlich, dass eine endseitige Lagerungseinrichtung der Wasserkraftschnecke ins Wasser eingetaucht ist, was bisher zu Problemen geführt hat, da die Lagerungseinrichtung nicht zuverlässig gegen Wasser abgedichtet werden kann und zur Schmierung der Lagerungseinrichtung eingesetzten Schmiermittel ins Wasser gelangen können. Des Weiteren besteht bei ins Wasser eingetauchten Lagerungseinrichtungen die Gefahr des Eindringens von Sand. Auch Wartungs- und Reparaturarbeiten sind aufgrund schlechter Zugänglichkeit erschwert.

Gemäß einer Weiterbildung der vorliegenden Erfindung ist das Mantelelement in einem zumindest abschnittsweise zur Außenseite des Mantelelementes konzentrischen Trog drehbar gelagert. Das Mantelelement samt dem mit diesem verbundenen Schneckenelement ist somit in der Art eines hydrostatischen Lagers innerhalb des ortsfesten Troges schwimmend gelagert. In einen zwischen der Außenseite des Mantelelementes und der Innenseite des Troges ausgebildeten Spaltbereich wird aus dem Oberwasser entnommenes Betriebswasser geleitet oder gepumpt, welches dem mit dem Schneckenelement verbundenen Mantelelement genügend Auftrieb gibt, um eine Berührung zwischen dem Mantelelement und dem Trog zu verhindern.

In einer bevorzugten Ausführungsvariante der Erfindung umgibt das Mantelelement zumindest entlang eines Abschnitts der Längserstreckung des Schneckenelementes den gesamten Umfang des Schneckenelementes. Insbesondere bei der kompletten Ummantelung des Schneckenelementes im Wesentlichen entlang dessen gesamter Längserstreckung durch das Mantelelement kann es bei durch Hochwasser bedingtem Wasserrückstau, im Gegensatz zu den bekannten, halboffenen, nichtmitdrehenden Trögen, verhindert werden, dass Fremdkörper wie Treibholz in die Schneckengänge eindringen und sich dort verkeilen.

In einer weiteren bevorzugten Ausführungsvariante der Erfindung ist es vorgesehen, dass das Schneckenelement in seinem dem Oberwasser zugewandten Endbereich mindestens eine Einlaufwandung aufweist, deren Einhüllende in einer Blickrichtung normal zur Drehachse, entgegen der Strömungsrichtung in Richtung zur Drehachse geneigt ist, wobei sich die Einlaufwandung vorzugsweise um mindestens eine halbe Schneckenwindung, d.h. über mindestens 180° um die Drehachse windet, bevor sie das Mantelelement kontaktiert.

Während bei konventionellen Wasserkraftschnecken durch das Schneckenelement eine im Wesentlichen radiale Eintrittskante zum Schneckengang ausgebildet wird, dh. der Schneckengang erweitert sich in Strömungsrichtung gesehen nicht kontinuierlich zu seinem vollem Durchmesser sondern entsteht durch Schnitt mit einer normal zur Scheckenachse liegenden Ebene (und bildet damit eine für Wasserlebewesen gefährliche, beilförmige Einlaufgeometrie aus), so gewährleistet das erfindungsgemäße kontinuierliche Aufbauen des Schneckengangs zu seinem vollem Durchmesser, dass Wasserlebewesen, welche mit dieser Einlaufwandung in Kontakt kommen, nicht verletzt werden. Die erfindungsgemäße Wasserkraftschnecke ist daher besonders "fischfreundlich".

In einer besonders bevorzugten Ausführungsvariante ragt die ansteigende Einlaufwandung zumindest abschnittsweise aus dem Mantelelement, d.h. über eine durch eine oberwasserseitige, offene Stirnseite des Mantelelements verlaufende Referenzebene hinaus.

In einer weiteren bevorzugten Ausführungsform ist es vorgesehen, das Mantelelement mit einem Schwimmkörper zu versehen, der dass Mantelelement zumindest im Bereich des Eintauchens in das Unterwasser umgibt und so eine an unterschiedliche Pegelstände des Unterwassers angepasste Neigung der Wasserkraftschnecke ermöglicht.

Gemäß einer zusätzlichen, bevorzugten Ausführungsvariante der Erfindung ist es vorgesehen, dass an der Außenseite des Mantelelementes, vorzugsweise in einem mittleren Bauteilabschnitt desselben, ein die Wasserkraftschnecke in axialer Richtung abstützender, den Umfang des Mantelelementes umgebender Auflagerkranz angeordnet ist, der zur Koppelung des Schneckenelementes mit dem Generator über das Mantelelement dient. Dadurch kann insbesondere bei Ausführungsvarianten ohne zentralem, durchgehendem Versteifungselement eine axiale Abstützung des Schneckenelementes erreicht werden, über welche gleichzeitig der Generator angebunden werden kann.

Gemäß einer weiteren bevorzugten Ausführungsvariante der Erfindung ist es vorgesehen, dass die dem Boden zugewandte oder abgewandte Oberseite des Auflagerkranzes von einer beliebigen Anzahl an Rollenelementen kraftschlüssig kontaktiert wird, welche dadurch ebenfalls in Rotation versetzt werden und in weiterer Folge den Generator antreiben. Diese Ausführungsvariante stellt eine besonders wartungsfreundliche Ankoppelung des Generators an das Schneckenelement bzw. Mantelelement dar.

Durch die Anordnung des Generators oberhalb des Mantelelementes kann die gesamte Konstruktion besonders hochwassersicher gebaut werden. Anzumerken ist in diesem Zusammenhang, dass der Begriff oberhalb sich auf die montierte Lage der Wasserkraftschnecke bezieht und den tatsächlich sich senkrecht oberhalb des Mantelelementes befindlichen Raum bezeichnet.

### KURZE BESCHREIBUNG DER FIGUREN

Die Erfindung wird nun anhand eines Ausführungsbeispiels näher erläutert. Dabei zeigt:
Fig.1 eine schematische Darstellung einer erfindungsgemäßen Wasserkraftschnecke in isometrischer Einzelansicht
Fig.2 eine schematische Darstellung der in einer Lagerungsvorrichtung gehaltenen erfindungsgemäßen Wasserkraftschnecke aus Fig.1
Fig.3 eine Schnittansicht durch die erfindungsgemäße Wasserkraftschnecke gemäß Fig.1 bei vertikaler Schnittebene (Ausführung mit zentralem Versteifungselement)
Fig.4 eine Schnittansicht durch die erfindungsgemäße Wasserkraftschnecke gemäß Fig.1 bei vertikaler Schnittebene (Ausführung ohne zentralem Versteifungselement)
Fig.5 die Wasserkraftschnecke gemäß Fig.4 in eingebauter und mit einem Generator gekoppelten Position (Schnittansicht entlang Schnittlinie A-A in Fig.6)
Fig.6 eine Draufsicht auf die erfindungsgemäße Wasserkraftschnecke gemäß Fig.5
Fig.7 eine schematische Darstellung einer in einem Trog gelagerten erfindungsgemäßen Wasserkraftschnecke (bei Vorderansicht der Wasserkraftschnecke in einer der Drehachse folgenden Blickrichtung)
Fig.8 eine Seitenansicht der oberwasserseitigen Einlaufwandung des Schneckengangs
Fig.9 eine Frontansicht der Einlaufwandung nach Fig.8

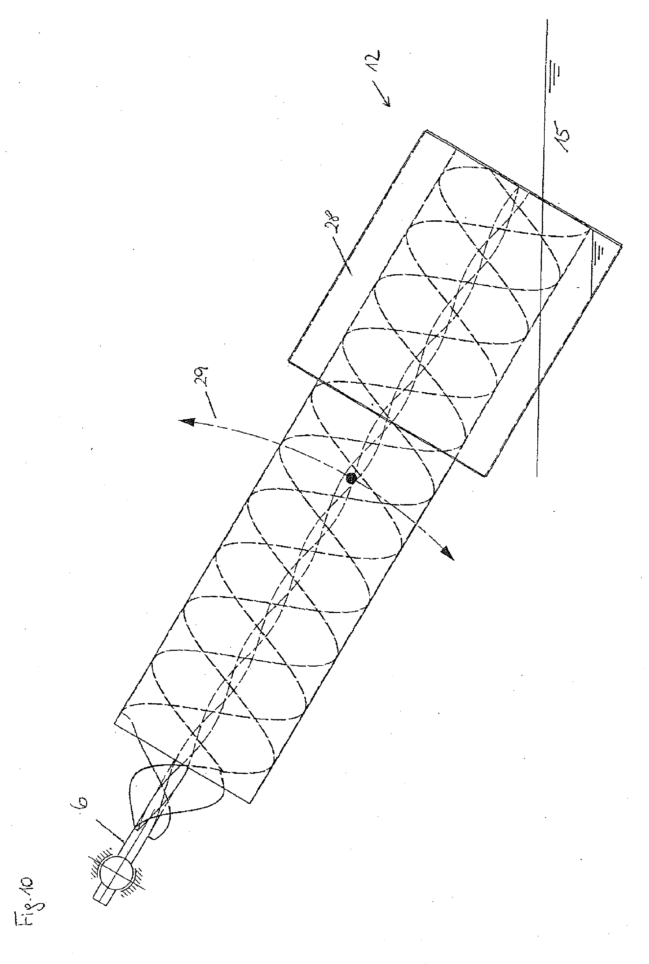

Fig.10 eine Seitenansicht einer Ausführungsvariante einer Wasserkraftschnecke mit Schwimmkörper

### WEGE ZUR AUSFÜHRUNG DER ERFINDUNG

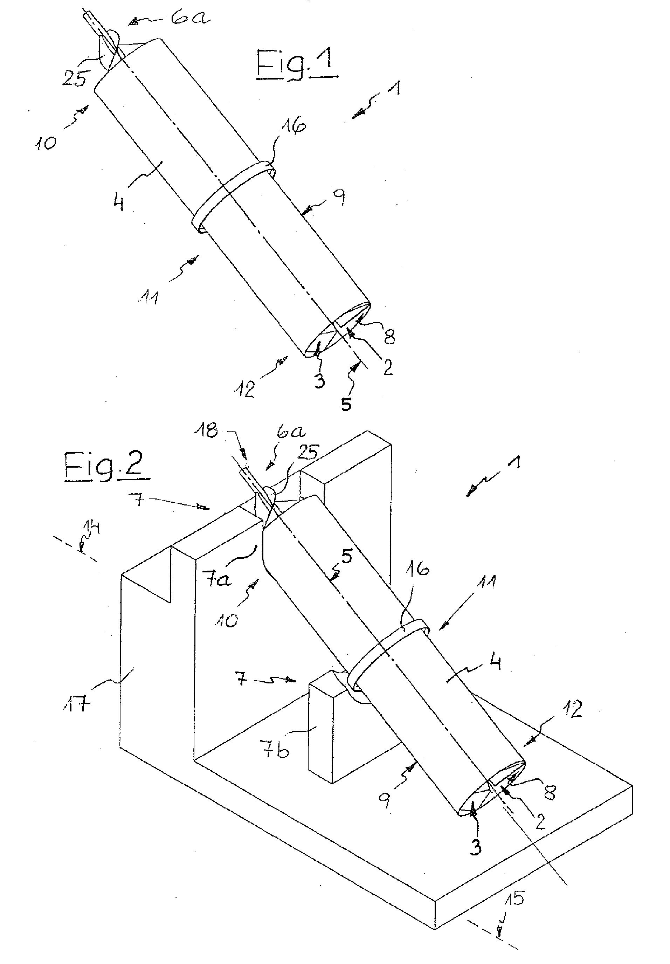

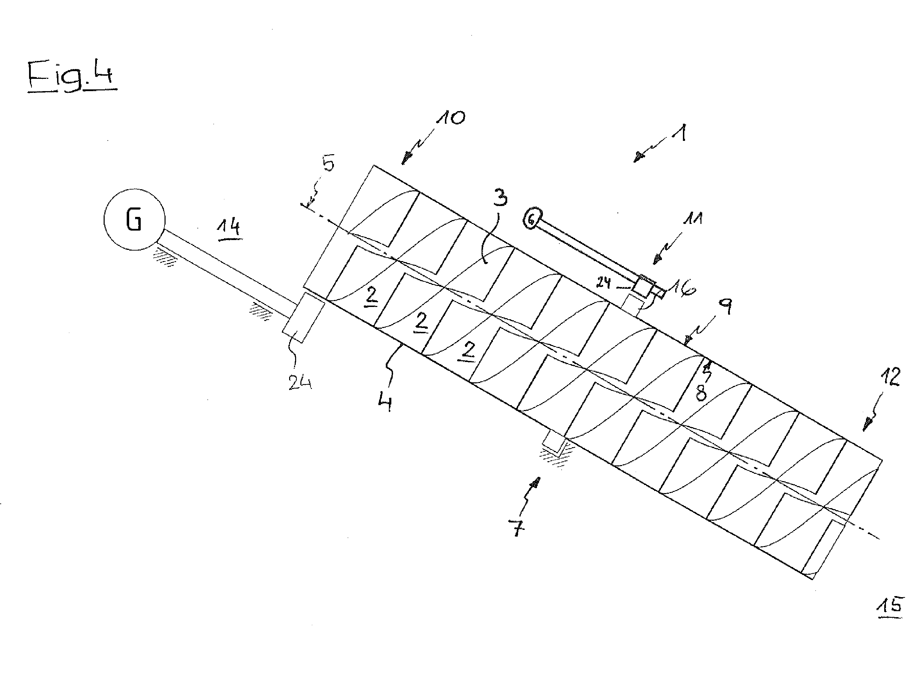

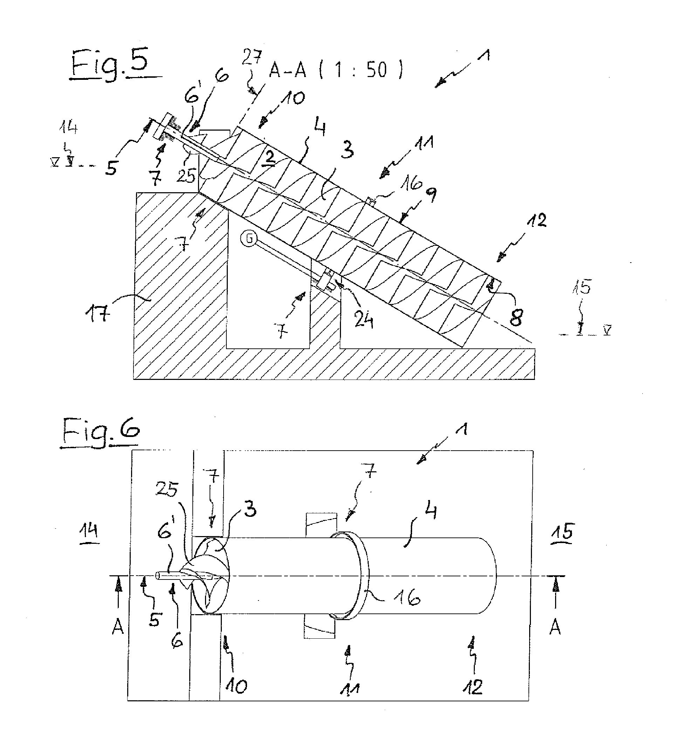

Fig.1 zeigt eine erfindungsgemäße Wasserkraftschnecke 1, umfassend ein von einem im Wesentlichen zylindrischen Mantelelement 4 umgebenes, mit einem in Fig.4 und Fig.5 schematisch eingezeichneten Generator G gekoppeltes Schneckenelement 3.

In Fig.2 sind in schematischer Weise ein Oberwasser(spiegel) 14 und ein Unterwasser(spiegel) 15 eines Strömungsgewässers eingezeichnet, wobei das Oberwasser 14 durch einen wallartigen Aufbau 17 von dem auf tieferem Niveau befindlichen Unterwasser 15 getrennt ist.

Die Wasserkraftschnecke 1 bzw. das kanalförmige, insbesondere rohrförmige Mantelelement 4 weist einen dem Oberwasser 14 zugewandten oberen Endbereich 10, einen dem Unterwasser 15 zugewandten unteren Endbereich 12 sowie einen zwischen den Endbereichen 10 und 12 angeordneten mittleren Bauteilabschnitt 11 auf.

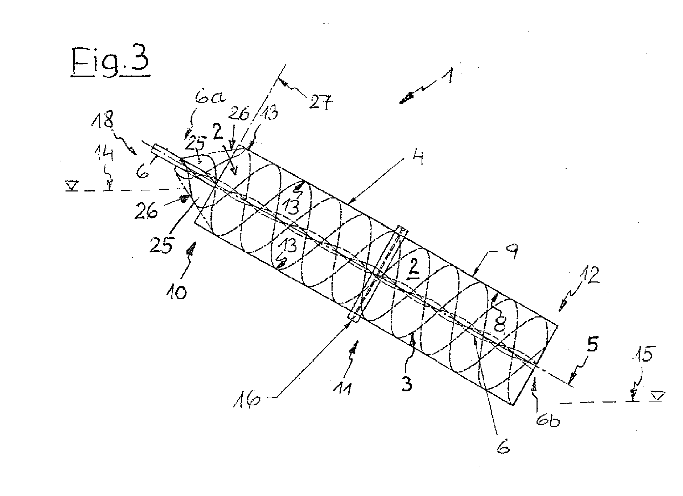

Wie in einer Vertikalschnittdarstellung gemäß Fig.3 ersichtlich, bildet das Schneckenelement 3 mittels entsprechend gewundener Wandungen einen Schneckengang 2 aus, welcher von über einen Einlauf 18 zugeleitetem, der Schwerkraft folgendem Oberwasser 14 durchströmbar ist, sodass das Schneckenelement 3 um eine Drehachse 5 in Rotation versetzt wird.

Das Mantelelement 4 ist erfindungsgemäß am Schneckenelement 3 starr befestigt. Zwischen dem Schneckenelement 3 und dem Mantelelement 4 findet somit keine Relativbewegung statt.

Die Wasserkraftschnecke 1 bzw. deren Drehachse 5 kann unter einer beliebigen Neigung, im Extremfall auch vertikal angeordnet sein.

Wie ebenfalls in Fig.3 ersichtlich, ist das Mantelelement 4 an gegenüber der Drehachse 5 peripheren, radialen Endbereichen 13 des Schneckenelementes 3 befestigt, vorzugsweise angeschweißt. Alternativ dazu kann das Mantelelement 4 auch mittels einer Schraubverbindung am Schneckenelement 3 befestigt sein.

Im vorliegenden Ausführungsbeispiel gemäß Fig.1-3 ist das Schneckenelement 3 mit einem die Drehachse 5 ausbildenden zentralen Versteifungselement 6 versehen. Das zentrale Versteifungselement 6 ist vorzugsweise mittels Schweißung mit dem Schneckenelement 3 verbunden.

Das zentrale Versteifungselement 6 ist vorzugsweise rohrförmig ausgeführt. Es sind jedoch auch beliebige andere Ausführungsformen des zentralen Versteifungselementes 6 möglich. So könnte der Querschnitt des zentralen Versteifungselementes 6 z.B. auch polygonal ausgeführt sein. Das zentrale Versteifungselement 6 kann des Weiteren hohl oder solide bzw. als Festkörper ausgeführt sein.

Gegenüber konventionellen Ausführungsvarianten kann das zentrale Versteifungselement 6 wesentlich kleiner dimensioniert werden (im Falle einer Ausführung als Rohrelement kann die Rohrwandung dünner ausgeführt werden).

Das zentrale Versteifungselement 6 muss sich des Weiteren nicht über die gesamte Länge des Schneckenelementes 4 bzw. der Drehachse 5 erstrecken. Hingegen ist es möglich, das Schneckenelement 4 lediglich in seinem dem Oberwasser 14 zugewandten oberen Endbereich mit einem zapfenförmigen bzw. stummelförmigen Versteifungselement 6 zu versehen.

Eine solche Ausführungsvariante ist in Fig.5 abgebildet, wobei das Versteifungselement 6 als Wellenstummel 6' ausgebildet ist, welcher sich über weniger als ein Viertel der Längserstreckung des Schneckenelementes 3, vorzugsweise über weniger als drei Windungen des Schneckenelementes 3 erstreckt.

Das Mantelelement 4 ist an seiner Außenseite 9 von mindestens einer, vorzugsweise als Wälzlager ausgeführten Lagerungseinrichtung 7 umgeben. Selbstverständlich kann alternativ oder ergänzend zu einer am Mantelelement 4 angreifenden Lagerungseinrichtung weiterhin eine Lagerung des Schneckenelementes 3 mittels in einem oberen Endbereich 6a und/oder in einem unteren Endbereich 6b des zentralen Versteifungselementes 6 angeordneter Lagerungszapfen, so wie dies bereits aus dem Stand der Technik bekannt ist, erfolgen.

Alternativ zu einer Ausführung der Lagerungseinrichtung 7 als Wälzlager könnte die Lagerungseinrichtung 7 auch als vorzugsweise aus Kunststoff ausgeführtes Gleitlager ausgeführt sein. Dem Gleitlager zugeführtes Wasser erfüllt hierbei sowohl eine Schmier- als auch eine Kühlungsfunktion.

Axiallagerelemente stützen die Wasserkraftschnecke 1 in axialer Richtung ab (in Fig.4: im mittleren Bauteilabschnitt 11 des Mantelelementes 4 bzw. am Auflagerkranz 16; in Fig.5: im oberen Endbereich 6a des zentralen Versteifungselementes 6 bzw. an einer Schulter des Wellenstummels 6').

In den Figuren 4 und 5 dargestellte Axiallagerelemente sind in identischer oder modifizierter Form und Anordnung auch in den weiteren Ausführungsvarianten der erfindungsgemäßen Wasserkraft-schnecke 1 gemäß den Figuren 1, 2, 3 und 7 vorgesehen, jedoch nicht dargestellt.

Die Lagerungseinrichtung 7 kann auch abweichend von den in den Figuren dargestellten Ausführungsvarianten ausgeführt und in beliebigen Bereichen des Mantelelementes 4 angeordnet sein.

Ebenso kann die Koppelung der Wasserkraftschnecke 1 mit dem Generator G an beliebigen Bereichen des Mantelelementes 5 oder des zentralen Versteifungselementes 6 erfolgen.

Im vorliegenden Ausführungsbeispiel gemäß Fig.2 ist das Mantelelement 4 in seinem oberen Endbereich 10 in einer ersten Lagerungseinrichtung 7a und in seinem mittleren Bauteilabschnitt 11 in einer zweiten Lagerungseinrichtung 7b drehbar gehalten. Die in Fig.2 lediglich schematisch angedeuteten Lagerungseinrichtungen 7a, 7b sind hierbei als Lagerböcke mit Wälzlagerelementen ausgeführt, wobei der erste Lagerbock 7a in den wallartigen Aufbau 17 integriert ist.

An der Außenseite 9 des Mantelelementes 4, vorzugsweise in dessen mittlerem Bauteilabschnitt 11, ist ein Auflagerkranz 16 angebracht, vorzugsweise angeschweißt. Der Auflagerkranz 16 weist einen kreisringförmigen Querschnitt auf und umgibt das Mantelelement 4 entlang seines gesamten Umfangs.

Zwischen der Außenseite des Auflagerkranzes 16 und der zweiten Lagerungseinrichtung bzw. dem zweiten Lagerbock 7b sind nicht dargestellte Wälzkörper angeordnet. Der Auflagerkranz 16 könnte den Lagerbock 7b auch direkt kontaktieren und solcherart ein Gleitlager ausbilden.

Die im Bereich des Einlaufs 18 angeordnete erste Lagerungseinrichtung 7a könnte analog zur bereits beschriebenen zweiten Lagerungseinrichtung 7b ausgestaltet sein, d.h. es könnte auch dort ein Auflagerkranz am Mantelelement 4 befestigt sein.

Es sind auch Ausführungsvarianten der erfindungsgemäßen Wasserkraftschnecke 1 möglich, bei welchen auf die Vorsehung eines zentralen Versteifungselementes 6 verzichtet wird (siehe Fig.4). Die Wasserkraftschnecke 1 kann hierbei ausschließlich an der Außenseite 9 des Mantelelementes 4 mittels einer oder mehrerer Lagerungseinrichtungen 7 gelagert sein. Die Lagerungseinrichtung 7 ist in Fig.4 als Radial- und Axiallager ausgebildet.

Die Koppelung des Schneckenelementes 3 mit dem Generator G erfolgt vorzugsweise durch eine kraft- oder formschlüssig mit dem Mantelelement 4 verbundene Abtriebseinrichtung.

Die Abtriebseinrichtung kann direkt mit dem Mantelelement 4 in Verbindung stehen, z.B. in Form eines Riemenantriebes oder in Form eines oder mehrerer, vorzugsweise gummierter Rollenelemente 24, welche die Außenseite des Mantelelementes 4 kraftschlüssig kontaktieren und welche in weiterer Folge den Generator G antreiben. Letztere Ausführungsvariante ist in schematischer Weise in Fig.4 dargestellt, wobei die Abtriebseinrichtung bzw. ein Rollenelement 24 im oberen Endbereich 10 des Mantelelementes 4 angeordnet ist.

Das Mantelelement 4 kann auch mit einem zum An- bzw. Eingriff der Abtriebseinrichtung vorgesehenen Transmissionselement versehen sein, z.B. mit einem aufgeschraubten Zahnkranz. In der Ausführungsvariante gemäß Fig.4,5 und 6 dient der Auflagerkranz 16 gleichzeitig als Transmissionselement zur Koppelung mit dem bezeichneten Generator G. Hierbei wird die dem Boden zugewandte Oberseite des Auflagerkranzes 16 (Fig.5) oder die dem Boden abgewandte Oberfläche des Auflagerkranzes 16 (Fig.4) von einer beliebigen Anzahl an Rollenelementen 24 kraftschlüssig kontaktiert, welche vom mit dem Mantelelement 4 mitrotierenden Auflagerkranz 16 ebenfalls in Rotation versetzt werden und in weiterer Folge den Generator G antreiben. Gemäß den Figuren 4,5 und 6 sind die Rollenelemente 24 im mittleren Bauteilabschnitt 11 des Mantelelementes 4 und parallel zur Drehachse des Mantelelementes 4 angeordnet.

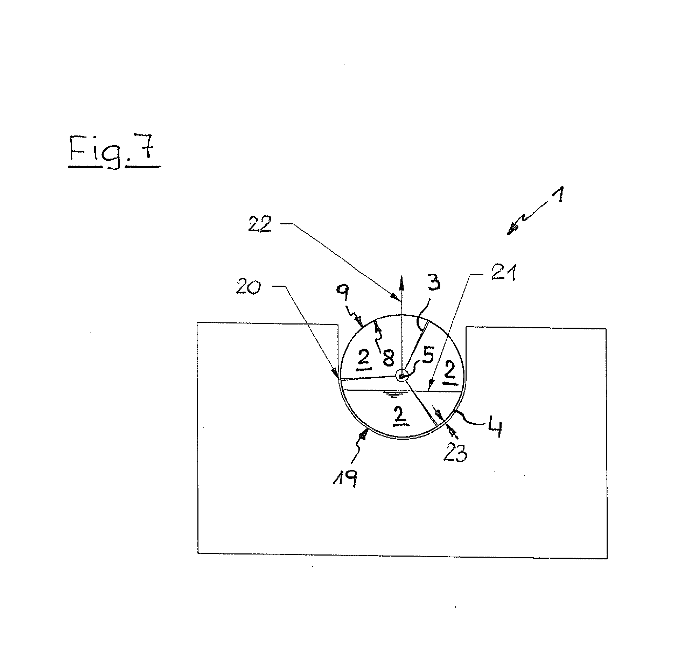

In einer in Fig.7 dargestellten Ausführungsvariante der Erfindung ist das Mantelelement 4 in einem zumindest abschnittsweise zur Außengeometrie des Mantelelementes 4 konzentrischen Trog 19 drehbar gelagert, sodass eine hydrostatische Lagerung realisiert wird (Fig.7 zeigt eine Vorderansicht der Wasserkraftschnecke 1 in einer der Drehachse 5 folgenden Blickrichtung). Hierbei wird in einen zwischen der Außenseite 9 des Mantelelementes 4 und der Innenseite des Troges 19 ausgebildeten Spaltbereich 23 aus dem Oberwasser 14 entnommenes Betriebswasser geleitet oder gepumpt, welches einen Auftrieb in einer vertikalen Richtung 22 und somit eine schwimmende Lagerung des Mantelelementes 4 innerhalb des Troges 19 bewirkt. Auf eine Vorsehung von Wälzlagern und dgl. zur Stützung des Mantelelementes 4 kann in solchem Falle verzichtet werden. Selbstverständlich sind auch Kombinationen aus Wälzlagerung und hydrostatischer bzw. Gleitlagerung möglich. Ein Axiallager, z.B. wie in Fig.4 ersichtlich, verhindert auch in dieser Ausführungsvariante ein Absacken der Wasserkraftschnecke 1.

Pos.Nr.20 bezeichnet in Fig.7 den Wasserstand im Trog 19 bzw. im Spaltbereich 23, während Pos.Nr.20 den relativ dazu tiefer liegenden Wasserstand innerhalb des Mantelelementes 4 bzw. innerhalb des Schneckenganges 2 bezeichnet.

Der ortsfest installierte Trog 19 kann offen, z.B. als nach oben hin offene Halbschale oder auch geschlossen, d.h. im Wesentlichen zylindrisch bzw. rohrförmig ausgebildet sein.

Das Mantelelement 4 kann mit einer oder mehreren verschließbaren Öffnungen, z.B. in Form von mit Scharnieren versehenen Deckeln, versehen sein. Diese (nicht dargestellten) verschließbaren Öffnungen ermöglichen bei Wartungsarbeiten einen schnellen Zugang zum Schneckenelement 3, ohne dieses aus dem Mantelelement 4 ausbauen zu müssen.

Um passierende Fische zu schonen, weist das erfindungsgemäße Schneckenelement 3 gemäß Fig.3 in seinem dem Oberwasser 14 zugewandten Endbereich mindestens eine, den Beginn des Schneckengangs 2 definierende, Einlaufwandung 25 auf, deren Einhüllende 26 in einer Blickrichtung normal zur Drehachse 5 und entgegen der Strömungsrichtung gesehen, in Richtung zur Drehachse 5 geneigt ist.

In einer besonders bevorzugten Ausführungsvariante der Erfindung entsteht die Einlaufwandung 25 durch Schnitt der den Schneckengang 2 ausbildenden Wandung mit einem Kegelmantel, dessen Spitze den Anfang des Schneckengangs 2 definiert.

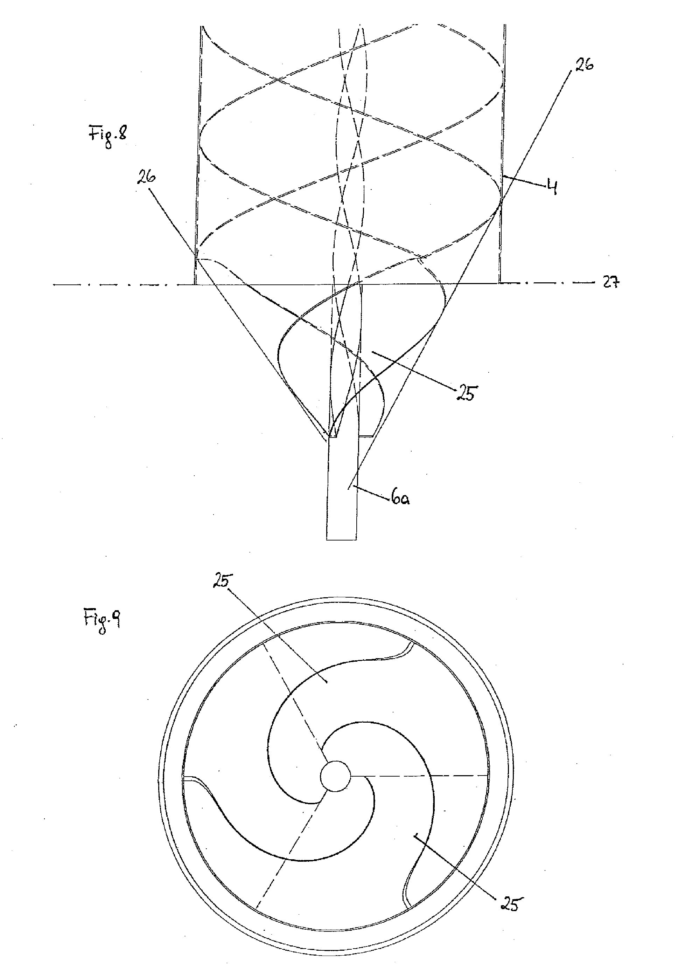

Fig.8 und 9 zeigen im Detail die Einlaufwandung 25, wobei auch ein Versteifungselement 6 bzw. dessen oberer Endbereich 6a vorgesehen ist.

Die Einlaufwandung 25 windet sich hierbei um mindestens eine halbe Schneckenwindung, d.h. über mindestens 180° um die Drehachse 5, bevor sie das Mantelelement 4 kontaktiert.

Die Kanten der Einlaufwandung 25 können zusätzlich abgerundet sein.

Die Einlaufwandung 25 ragt zumindest abschnittsweise aus dem Mantelelement 4, d.h. über eine durch eine oberwasserseitige, offene Stirnseite des Mantelelements 4 verlaufende, in Fig.3 eingezeichnete Referenzebene 27 hinaus.

Wie in Fig.3 und Fig.5 ersichtlich, "windet" sich somit ein in Betriebsposition befindliches, mit einer erfindungsgemäßen Einlaufwandung 25 versehenes Schneckenelement 3 in die vom Oberwasser 14 gebildete Wasseroberfläche hinein, sodass mit der Einlaufwandung 25 kollidierende Fische schonend stromabwärts befördert werden, ohne Schaden zu nehmen.

In einer besonders bevorzugten Ausführungsvariante der Erfindung ist am Mantelelement 4, bevorzugterweise an seinem dem Unterwasser 15 zugewandten Endbereich 12, ein Schwimmkörper 28 angeordnet. Der Schwimmkörper 28 ist bevorzugterweise als zylindrisches Mantelelement ausgebildet, welches das Mantelelement 4 zumindest Abschnittsweise umgibt so dass dieses im Bereich des Schwimmkörpers 28 auf dem Unterwasser ganz oder teilweise aufschwimmt.

Im dem Oberwasser 14 zugewandten Endbereich der Wasserkraftschnecke 1 ist diese, vorzugsweise in einer vertikal verlaufenden Ebene, in Richtung der Pfeile 29 schwenkbar gelagert, beispielsweise über das Versteifungselement 6 oder den Wellenstummel 6'. Es ist auch eine Verschwenkbarkeit der Wasserkraftschnecke in einer horizontalen Ebene denkbar, allerdings würde in diesem Fall eine gewisse Selbstausrichtung durch das durch die Wasserkraftschnecke strömende Oberwasser 14 stattfinden.

Der Schwimmkörper 28 weist erfindungsgemäß zumindest einen mit Wasser befüllbaren Hohlraum auf, über welchen sich die Eintauchtiefe der Wasserkraftschnecke im Unterwasser 14 regulieren lässt.

Die Ausführungsvariante mit Schwimmkörper 28 bewirkt, dass sich der Schneckenaustritt automatisch bei steigendem Unterwasser hebt und bei sinkendem Unterwasser senkt und dadurch Verluste durch ungünstige Eintauchtiefen vermieden bzw. vermindert werden. Bei der Auslegung des Schwimmkörpers 28 ist auf die Einbaurandbedingungen Bedacht zu nehmen. Der Schwimmkörper 28 kann sich daher über die komplette Länge des Mantelelementes 4 erstrecken oder aber nur über einen Abschnitt, bevorzugterweise den oben beschriebenen Endabschnitt 12.

## Patentansprüche

1. Wasserkraftschnecke (1), umfassend ein von einem Mantelelement (4) umgebenes, mit einem Generator (G) gekoppeltes Schneckenelement (3), wobei das Schneckenelement (3) mindestens einen Schneckengang (2) ausbildet, welcher von einem der Schwerkraft folgendem Oberwasser (14) in Richtung eines Unterwassers (15) durchströmbar und dadurch das Schneckenelement (3) um eine Drehachse (5) in Rotation versetzbar ist, **dadurch gekennzeichnet, dass** das Mantelelement (4) am Schneckenelement (3) befestigt ist und die Koppelung des Schneckenelementes (3) mit dem Generator (G) durch eine kraft- oder formschlüssig mit dem Mantelelement (4) verbundene Abtriebseinrichtung erfolgt.

2. Wasserkraftschnecke nach Anspruch 1, **dadurch gekennzeichnet, dass** das Mantelelement (4) an gegenüber der Drehachse (5) peripheren Endbereichen (13) des Schneckenelementes (3) befestigt ist.

3. Wasserkraftschnecke nach Anspruch 1 oder 2, **dadurch gekennzeichnet, dass** das Schneckenelement (3) mit einem die Drehachse (5) ausbildenden zentralen Versteifungselement (6) versehen ist, wobei Endbereiche (6a, 6b) dieses zentralen Versteifungselementes (6) oder an den Endbereichen (6a, 6b) des zentralen Versteifungselementes (6) angebrachte Lagerungsfortsätze in korrespondierenden Lagerungseinrichtungen (7) drehbar gelagert sind.

4. Wasserkraftschnecke nach Anspruch 3, **dadurch gekennzeichnet, dass** das Versteifungselement (6) als Wellenstummel (6') ausgebildet ist, welcher sich über weniger als ein Viertel der Längserstreckung des Schneckenelementes (3) erstreckt und vorzugsweise in einem dem Oberwasser (14) zugewandten Endbereich des Schneckenelementes (3) angebracht ist.

5. Wasserkraftschnecke nach Anspruch 1 oder 2, **dadurch gekennzeichnet, dass** das Mantelelement (4) an seiner Außenseite (9) von mindestens einer, vorzugsweise als Wälzlager ausgeführten Lagerungseinrichtung (7) umgeben ist, sodass im Bereich der Drehachse (5) kein zentrales Versteifungselement (6) erforderlich ist.

6. Wasserkraftschnecke nach einem der Ansprüche 1 bis 5, **dadurch gekennzeichnet, dass** das Mantelelement (4) in einem zumindest abschnittsweise zur Außenseite (9) des Mantelelementes (4) konzentrischen Trog (19) drehbar gelagert ist, wobei in einen zwischen der Außenseite (9) des Mantelelementes (4) und der Innenseite des Troges (19) ausgebildeten Spaltbereich (23) aus dem Oberwasser (14) entnommenes Betriebswasser leit- oder pumpbar ist, welches einen Auftrieb und somit eine schwimmende Lagerung des Mantelelementes (4) innerhalb des Troges (19) bewirkt.

7. Wasserkraftschnecke nach einem der Ansprüche 1 bis 6, **dadurch gekennzeichnet, dass** das Mantelelement (4) zumindest entlang eines Abschnitts der Längserstreckung des Schneckenelementes (3), vorzugsweise entlang der gesamten Längserstreckung des Schneckenelementes (3), den gesamten Umfang des Schneckenelementes (3) umgibt.

8. Wasserkraftschnecke nach einem der Ansprüche 1 bis 7, **dadurch gekennzeichnet, dass** das Schneckenelement (3) in seinem dem Oberwasser (14) zugewandten Endbereich mindestens eine Einlaufwandung (25) aufweist, deren Einhüllende (26) in einer Blickrichtung normal zur Drehachse (5), entgegen der Strömungsrichtung in Richtung zur Drehachse (5) geneigt ist.

9. Wasserkraftschnecke nach Anspruch 8, **dadurch gekennzeichnet, dass** sich die Einlaufwandung (25) vorzugsweise um mindestens eine halbe Schneckenwindung, d.h. über mindestens 180° um die Drehachse (5) windet, bevor sie das Mantelelement (4) kontaktiert.

10. Wasserkraftschnecke nach Anspruch 8 oder 9, **dadurch gekennzeichnet, dass** die Einlaufwandung (25) zumindest abschnittsweise aus dem Mantelelement (4), d.h. über eine durch eine offene Stirnseite des Mantelelements (4) verlaufende Referenzebene (27) hinausragt.

11. Wasserkraftschnecke nach einem der Ansprüche 1 bis 10, **dadurch gekennzeichnet, dass** am Mantelelement (4), vorzugsweise an seinem dem Unterwasser (15) zugewandten Endbereich (12), ein Schwimmkörper (28) angeordnet ist.

12. Wasserkraftschnecke nach Anspruch 11, **dadurch gekennzeichnet, dass** das die Wasserkraftschnecke (1) im Bereich des Oberwassers (14) schwenkbar, vorzugsweise in einer vertikal verlaufenden Ebene schwenkbar gelagert ist.

13. Wasserkraftschnecke nach einem der Ansprüche 11 oder 12, **dadurch gekennzeichnet, dass** der Schwimmkörper (28) zumindest einen mit Wasser befüllbaren Hohlraum aufweist.

14. Wasserkraftschnecke nach einem der Ansprüche 1 bis 13, **dadurch gekennzeichnet, dass** an der Außenseite (9) des Mantelelementes (4), vorzugsweise in einem mittleren Bauteilabschnitt (11) desselben, ein die Wasserkraftschnecke (1) in axialer Richtung abstützender, den Umfang des Mantelelementes (4) umgebender Auflagerkranz (16) angeordnet ist, der zur Koppelung des Schneckenelementes (3) mit dem Generator (G) über das Mantelelement (4) dient.

15. Wasserkraftschnecke nach Anspruch 14, **dadurch gekennzeichnet, dass** die dem Boden zugewandte oder abgewandte Oberseite des Auflagerkranzes (16) von einer beliebigen Anzahl an Rollenelementen (24) kraftschlüssig kontaktiert wird, welche dadurch ebenfalls in Rotation versetzt werden und in weiterer Folge den Generator (G) antreiben.

16. Wasserkraftschnecke (1) nach einem der Ansprüche 1 bis 15, **dadurch gekennzeichnet, dass** der Generator (G) in einem Bereich oberhalb des Mantelelementes (4) angeordnet ist.
